# EUROPEAN PATENT APPLICATION

(11) **EP 4 400 369 A1**
(43) Date of publication of application: **17.07.2024**
(21) Application number: 21956301.2
(22) Date of filing: 07.09.2021
(51) Int. Cl.: B60R 11/02

(54) **SLIDE SCREEN DRIVING SYSTEM, AND VEHICLE**

(71) Applicant: Zhejiang Smart Intelligence Technology Co., Ltd., Ningbo, Zhejiang 315336 (CN)
(72) Inventor: CAI, Hongjie, Hangzhou Bay New District Ningbo, Zhejiang 315336 (CN); JIANG, Jian, Hangzhou Bay New District Ningbo, Zhejiang 315336 (CN); BIAN, Chengguo, Hangzhou Bay New District Ningbo, Zhejiang 315336 (CN); DENG, Baimen, Hangzhou Bay New District Ningbo, Zhejiang 315336 (CN)
(74) Representative: Zaboliene, Reda
(86) International application number: PCT/CN2021/116942
(87) International publication number: WO 2023/035112

(57) **Abstract**

A slide screen driving system (100) and a vehicle. The slide screen driving system (100) may comprise a driving assembly (10), a slide screen (20), and a controller (30). The driving assembly (10) is connected to the slide screen (20). The controller (30) is used to control, according to a received instruction, the driving assembly (10) to drive the slide screen (20) to translate and/or rotate.

## Description

### TECHNICAL FIELD

The present document relates to a field of automotive technology, in particular to a slide screen driving system and a vehicle having the same.

### DESCRIPTION OF RELATED ART

With the improvement of living standards, the sense of technology in vehicles has gradually increased, and arranging a display screen inside the vehicle has become a standard arrangement. In current vehicles, the display screen is generally set between the main driver and the co-pilot position. When using the display screen, both the main driver and the co-pilot look toward the center position. In some special usage situations, such as when a person in the main driver's or the co-pilot's seat is small or has poor eyesight, he may not be able to see the displayed image clearly when viewing the display screen. In this case, the inability to change the position of the display screen will cause many inconveniences and even lead to security risks. In some existing technologies, in order to address this issue, some vehicles are equipped with one display screen at the main driver and the co-pilot position respectively. However, the cost of two displays is relatively high, and the frequency of using the two displays at the same time is low, which results in a waste of resources.

### SUMMARY

In view of the above problems, the present document is proposed to provide a slide screen driving system and a vehicle that overcomes or at least partially solves the above problems.

An object of the present document is to provide a slide screen driving system to solve the problem in the prior art that one screen is unable to be used in different positions.

Another object of the present document is to solve the problem of high cost in prior art.

A further object of the present document is to provide a vehicle including the aforementioned slide screen driving system.

Particularly, according to one aspect of the embodiment of the present document, a slide screen driving system is provided, which includes:

A driving assembly;
A slide screen connected to the driving assembly; and
A controller configured for controlling the driving assembly to drive the slide screen to translate and/or rotate according to received instructions.

Optionally, a mounting bracket is connected to the driving assembly and the slide screen. The driving assembly and the slide screen are mounted to a target object through the mounting bracket, and the target object includes a first position and a second position.

The mounting bracket is configured to at least extend from the first position to the second position when the mounting bracket is disposed on the target object, so that the slide screen can move between the first position and the second position along the mounting bracket.

Optionally, the mounting bracket is of a linear structure, and the first and the second positions are located on a line segment formed by the mounting bracket.

Optionally, the mounting bracket is configured to connect the driving assembly and the slide screen to the target object and guide the slide screen. The slide screen is located at a side of the mounting bracket which is away from the target object, and the driving assembly is located at a side of the mounting bracket which is close to the target object. The mounting bracket is a frame structure, and the frame structure includes a pair of parallel edges. When the slide screen moves under the drive of the driving assembly, the slide screen moves under the guidance of the two parallel edges of the mounting bracket.

Optionally, the mounting bracket includes an outer rail which is far from the target object and an inner rail which is close to the target object. The outer rail is configured to support and guide the slide screen, and the driving assembly is located between the outer rail and the inner rail.

The number of the inner rails is two. One end of each inner rail is connected to the outer rail and the other end of each inner rail is bent towards a side close to the target object. The inner rail is configured to connect the outer rail to the target object.

Optionally, the driving assembly includes:
A driving motor for providing power; and
A movable component being connected to the slide screen. The movable component moves under an action of the driving motor to drive the slide screen to move.

Optionally, the driving assembly further includes a transmission mechanism, which is arranged between the driving motor and the movable component to transmit the power of the driving motor to the movable component.

Optionally, the driving motor includes an output shaft, and the movable component includes an input shaft.

The transmission mechanism includes a conveyor belt, which is arranged between the output shaft and the input shaft to transmit the power of the driving motor to the movable component.

Optionally, the driving motor includes an output shaft, and the movable component includes an input shaft.

The transmission mechanism includes a first gear disposed at the output shaft and a second gear disposed at the input shaft. The first gear and the second gear engage with each other, to transmit the power of the driving motor to the movable component.

Optionally, the movable component includes:
A screw bolt which is parallel to a guiding side of the outer rail, and the screw bolt is connected to the driving motor through the transmission mechanism and is rotatable under the drive of the driving motor; and
A nut which is sleeved around the screw bolt, and is connected to the slide screen so that the slide screen moves together with the nut when the screw bolt rotates.

Optionally, the driving assembly further includes a rotation motor which is arranged between the movable component and the slide screen to drive the slide screen to rotate.

Optionally, the controller includes:
A gesture control system configured for obtaining and identifying gesture instructions of a user in front of the slide screen as received instructions, and controlling the driving assembly to drive the slide screen to translate and/or rotate according to the gesture instructions.

Optionally, the controller includes:
A voice control system configured for obtaining and identifying voice instructions from a user in front of the slide screen as received instructions, and controlling the driving assembly to drive the slide screen to translate and/or rotate according to the voice instructions.

Optionally, the controller includes:
A button control system configured for obtaining button instructions as received instructions, and controlling the driving assembly to drive the slide screen to translate and/or rotate according to the button instructions.

Optionally, the target object further includes an initial position, which is located between the first position and the second position. The slide screen includes a horizontal screen state and a vertical screen state.

The controller is configured to:
Controlling the slide screen to translate to the initial position and rotate to the vertical screen state when the slide screen is powered off;
Controlling the slide screen to the first position, the second position, or to translate between the first position and the second position, as well as controlling the slide screen to rotate between the horizontal and the vertical screen states according to the received instructions when the slide screen is powered on.

Optionally, the controller is further configured to:
Controlling the slide screen to stop moving or rotating as the slide screen is subjected to a force in a direction opposite to a preset direction during translation or rotation along the preset direction and the force is greater than or equal to a first preset value, and controlling the slide screen to continue its previous motion as the force applied to the slide screen is less than the first preset value.

Optionally, the controller is further configured to:
Controlling the slide screen to translate or rotate in a direction opposite to a preset direction as the slide screen is subjected to a force in the direction opposite to the preset direction during translation or rotation along the preset direction and the force is greater than or equal to a second preset value, and controlling the slide screen to stop moving when the slide screen translates a preset distance or rotates a preset angle in the direction opposite to the preset direction.

Among them, the first preset value is smaller than the second preset value, the preset distance is from 1mm to 3mm, and the preset angle is from 1° to 5°.

Specifically, the present document further provides a vehicle including a slide screen driving system as described above.

The slide screen driving system in the present document controls the driving assembly through the controller, which drives the slide screen to translate or rotate, so that the slide screen is translated to a designated position to realize the use of one screen in different positions. It also enables the slide screen to rotate to a desired state (such as a horizontal or a vertical screen state), making the use of the slide screen more convenient, meeting user requirements, and improving user experience. In addition, since the slide screen driving system of the present document only includes one slide screen, the cost of the slide screen driving system of the present document is low and the cost is saved.

The slide screen driving system of the present document includes a gesture control system, a voice control system, and/or a button control system so that the translation and rotation of the slide screen in the slide screen driving system may be controlled through gestures, voice, or buttons, thereby making the use of the slide screen driving system of the present document more convenient and intelligent.

In the slide screen driving system of the present document, the slide screen stops moving or moves in the opposite direction as the slide screen is subjected to external forces or obstacles during translation or rotation, which avoids damage to the slide screen or the driving assembly and improves the service life of the slide screen driving system.

The above description is only an overview of the technical solution of the present document. In order to understand the technical solutions of the present document more clearly, implement the technical solutions in accordance with the content of the specification, and make the above and other purposes, features, and advantages of the present document more obvious and understandable, the specific embodiments of the present document are given as below.

Based on the detailed description of the specific embodiments of the present document in conjunction with the accompanying drawings, those skilled in the art will further understand the above and other purposes, advantages, and features of the present document.

### BRIEF DESCRIPTION OF THE DRAWINGS

Some specific embodiments of the present document will be described in detail below with reference to the accompanying drawings in an exemplary rather than restrictive manner. The same reference numbers in the drawings indicate the same or similar components or parts. Those skilled in the art will appreciate that these drawings are not necessarily drawn to scale. In the attached figures:
Figure 1 is a schematic structural view of a slide screen driving system according to an embodiment of the present document;
Figure 2 is a schematic top view of a slide screen driving system according to an embodiment of the present document;
Figure 3 is a schematic view showing a connection manner between a mounting bracket and a slide screen of the slide screen driving system according to an embodiment of the present document;
Figure 4 is a schematic view showing a connection manner between a mounting bracket and a slide screen of the slide screen driving system according to another embodiment of the present document;
Figure 5 is a schematic block diagram of a gesture control system of a slide screen driving system according to an embodiment of the present document;
Figure 6 is a schematic block diagram of a voice control system of a slide screen driving system according to an embodiment of the present document;
Figure 7 is a schematic block diagram of a button control system of a slide screen driving system according to an embodiment of the present document.

### DETAILED DESCRIPTION OF THE EMBODIMENTS

The exemplary embodiments of the present document will be described in more detail below with reference to the accompanying drawings. Although the exemplary embodiments of the present document are shown in the accompanying drawings, it should be understood that the present document may be implemented in various forms and should not be limited by the embodiments described here. On the contrary, these embodiments are provided in order to have a more thorough understanding of the present document and to fully convey the scope of the present document to those skilled in the art.

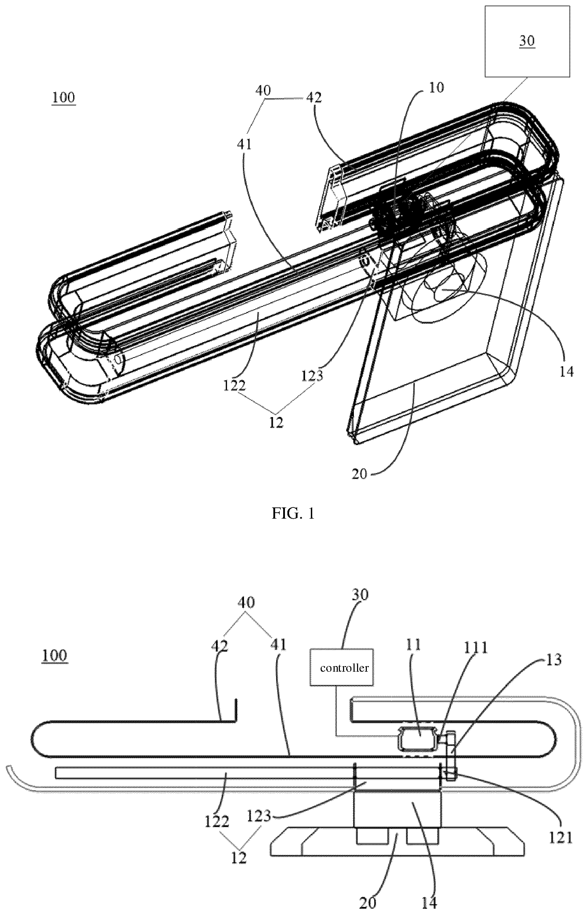

Figure 1 is a schematic structural view of a slide screen driving system according to an embodiment of the present document. Figure 2 is a schematic top view of a slide screen driving system according to an embodiment of the present document.

As a specific embodiment of the present document, see Figures 1 and 2, the present embodiment provides a slide screen driving system 100, which may include a driving assembly 10, a slide screen 20, and a controller 30. Among them, the slide screen 20 is connected to the driving assembly 10, and the controller 30 controls the driving assembly 10 to drive the slide screen 20 to translate and/or rotate according to received instructions.

In this embodiment, the slide screen driving system 100 controls the driving assembly 10 through the controller 30, which drives the slide screen 20 to translate horizontally or rotate, so that the slide screen 20 may be translated to a designated position and rotated to a desired state, thereby making the use of the slide screen 20 more convenient.

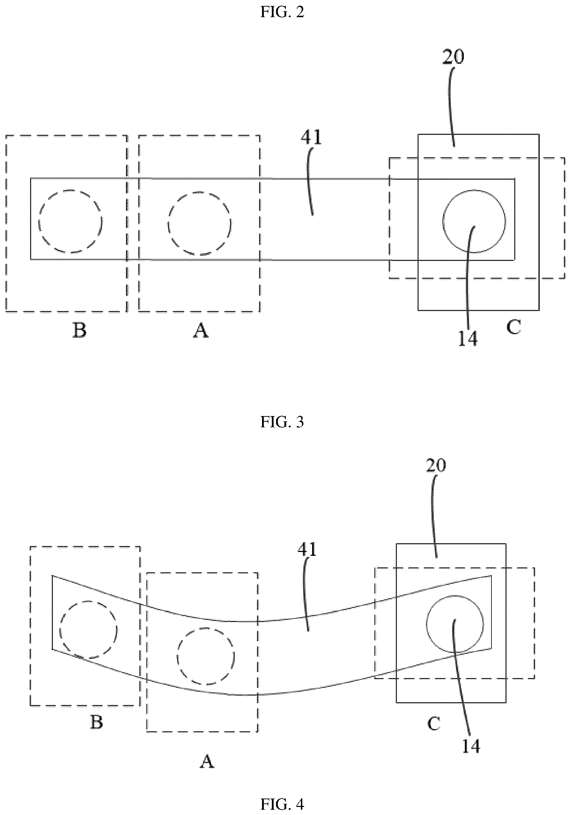

Figure 3 is a schematic view showing a connection manner between the mounting bracket and the slide screen of the slide screen driving system according to an embodiment of the present document. Figure 4 is a schematic view showing a connection manner between the mounting bracket and the slide screen of the slide screen driving system according to another embodiment of the present document. As a specific embodiment of the present document, as shown in Figures 1-4, the slide screen driving system 100 of the present embodiment may further include a mounting bracket 40, which is connected to the driving assembly 10 and the slide screen 20. The driving assembly 10 and the slide screen 20 is disposed at a target object through the mounting bracket 40. The target object may include a first position (position B in Figures 3 and 4) and a second position (position C in Figures 3 and 4).

In this embodiment, the mounting bracket 40 is configured to at least extend from the first position to the second position when the mounting bracket 40 is disposed at the target object, so that the slide screen 20 can move between the first position and the second position.

Specifically, the target object may be a wall, a front panel of a vehicle, or other locations where a slide screen needs to be installed. In this embodiment, the slide screen driving system 100 being disposed on the front panel of the vehicle is taken as an example for specific explanation.

In this embodiment, when the slide screen 20 is disposed at the front panel of the vehicle, it is generally that both the driver and the copilot have requirements of viewing the slide screen 20. Therefore, if the slide screen 20 is disposed at a fixed position, some passengers far away from the slide screen 20 may not be able to see the images on the slide screen clearly. This embodiment utilizes the slide screen driving system 100 to drive the slide screen 20 to a desired position, thereby meeting user requirements and improving user experience.

In this embodiment, the first and the second positions may be the main driving position (B position at the left side in Figures 3 and 4) and the copilot position (C position at the right side in Figures 3 and 4) of the vehicle. The mounting bracket 40 extends from the main driving position to the copilot position, and the mounting bracket 40 may be a linear (as shown in Figure 3) or non-linear structure (as shown in Figure 4). For example, the mounting bracket 40 may be in an arc shape such as a semicircle, a semi ellipse, or S-shape. The slide screen 20 may be translated along the mounting bracket 40, allowing it to move back and forth between the main driving position and the copilot position, to meet the viewing requirements of both the driver and the copilot. This embodiment mainly takes the mounting bracket 40 as a linear structure as an example for specific explanation.

As a specific embodiment of the present document, the mounting bracket 40 of the present embodiment has a linear structure, and the first and the second positions are located on a line segment formed by the mounting bracket 40. The first and the second positions may be located exactly at two opposite ends of the mounting bracket 40 or at a middle portion of the mounting bracket 40. When the first and the second positions are at located the opposite ends of the mounting bracket 40, the slide screen 20 may translate between the opposite ends of the mounting bracket 40.

As a specific embodiment of the present document, the mounting bracket 40 of the present embodiment is configured to connect the driving assembly 10 and the slide screen 20 to the target object and guide the slide screen 20. The slide screen 20 is located at a side of the mounting bracket 40 which is away from the target object, and the driving assembly 10 is located at a side of the mounting bracket 40 which is close to the target object. The mounting bracket 40 of the present embodiment is a frame structure, and an opening in a middle of the frame structure provides a space for the translation of the slide screen 20. The frame structure in this embodiment may include a pair of parallel edges. When the slide screen translates under the drive of the driving assembly 10, the slide screen 20 translates under the guidance of the two parallel edges of the mounting bracket 40.

Specifically, the mounting bracket 40 of this embodiment is a frame structure with four sides. The frame structure with four sides includes upper and lower sides and left and right sides. The upper and the lower sides are parallel to each other, and the slide screen 20 moves horizontally along the upper and the lower sides. The left and the right sides are the areas connected to the target object. It may be directly connected to the target object or be connected to the target object through other connecting brackets.

As a specific embodiment, the mounting bracket 40 of this embodiment may include an outer rail 41 far from the target object and an inner rail 42 close to the target object. The outer rail 41 is configured to support and guide the slide screen 20, and the driving assembly 10 is located between the outer rail 41 and the inner rail 42. The number of the inner rails 42 may be two. One end of each inner rail 42 is connected to the outer rail 41 and the other end of each inner rail 42 is bent towards the target object. The inner rail 42 is configured to connect the outer rail 41 to the target object.

Specifically, the inner rail 42 bends towards the front of the vehicle, and each inner rail 42 forms a "J" shaped structure. The inner rail 42 is mainly to install and support the mounting bracket 40 to the target object, and there is a gap between the inner rail 42 and the outer rail 41, which is configured to place the driving assembly 10.

As a specific embodiment of the present document, the driving assembly 10 of the present embodiment may include a driving motor 11 and a movable component 12. Among them, the driving motor 11 is configured for providing power. The movable component 12 is connected to the slide screen 20 and moves under the action of the driving motor 11 to drive the slide screen 20 to move.

As a specific embodiment of the present document, the driving assembly 10 of the present embodiment may further include a transmission mechanism 13, which is arranged between the driving motor 11 and the movable component 12 to transmit the power of the driving motor 11 to the movable component 12.

As one embodiment, the driving motor 11 may include an output shaft 111, and the movable component 12 may include an input shaft 121. The transmission mechanism 13 may include a conveyor belt, which is arranged between the output shaft 111 and the input shaft 121 to transmit the power of the driving motor 11 to the movable component 12. The conveyor belt may be a leather belt or a steel belt, which can be designed according to specific circumstances.

As another embodiment, the driving motor 11 may include an output shaft 111, and the movable component 12 may include an input shaft 121. The transmission mechanism 13 may include a first gear (not shown in the figure) arranged at the output shaft 111 and a second gear (not shown in the figure) arranged at the input shaft 121. The first gear and the second gear engage with each other to transmit the power of the driving motor 11 to the movable component 12.

In this embodiment, no matter the transmission mechanism 13 is a conveyor belt or a gear assembly, it transmits the transmission force of the driving motor 11 to the movable component 12, and makes a rotation axis of the movable component 12 parallel to a rotation axis of the driving motor 11.

As a specific embodiment of the present document, the movable component 12 of the present embodiment may include a screw bolt 122 and a nut 123, wherein the screw bolt 122 is parallel to a guiding edge of the outer slide 41, and the screw bolt 122 is connected to the driving motor 11 through the transmission mechanism 13, which rotates under the drive of the driving motor 11. The nut 123 is sleeved around the screw bolt 122, and the nut 123 is connected to the slide screen 20, so that when the screw bolt 122 rotates, the slide screen 20 could translate together with the nut 123.

As a specific embodiment of the present document, the driving assembly 10 of the present embodiment may further include a rotation motor 14, which is arranged between the movable component 12 and the slide screen 20 to drive the slide screen 20 to rotate. For example, the slide screen 20 is generally a rectangular structure. In normal use, long sides of the slide screen 20 are disposed horizontally, while its wide sides are disposed vertically. In some special situations, such as watching videos in full screen or other APPs, it is required to rotate the long sides of the slide screen 20 to the vertical direction. However, the slide screen 20 currently used in vehicles either cannot rotate or cannot translate horizontally. In this embodiment, the driving assembly 10 is configured to drive the slide screen 20 to translate and rotate, which can meet the different requirements of different users and improve the user experience.

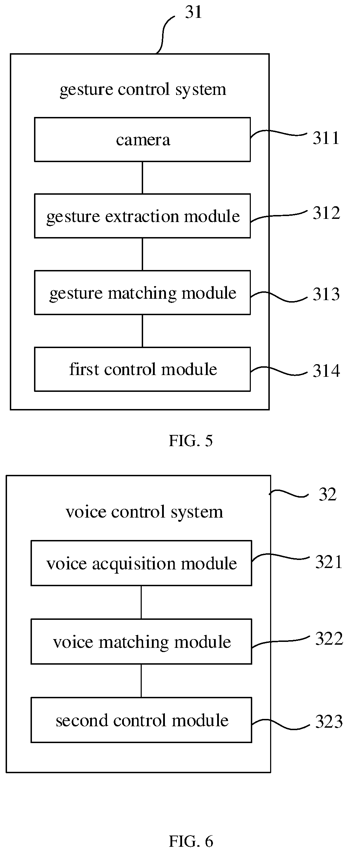

Figure 5 is a schematic block diagram of a gesture control system of a slide screen driving system according to an embodiment of the present document. As a specific embodiment of the present document, the controller 30 of the present embodiment may include a gesture control system 31, which is configured to obtain and identify gesture instructions from users in front of the slide screen 20 as received instructions, and control the driving assembly 10 to drive the slide screen 20 to translate and/or rotate according to the gesture instructions.

Specifically, the gesture control system 31 may include a camera 311, a gesture extraction module 312, a gesture matching module 313, and a first control module 314. The camera 311 is disposed at the slide screen 20 for collecting action videos in front of the slide screen 20. The gesture extraction module 312 is configured for extracting gesture information from the action videos. The gesture matching module 313 is configured for identifying standard gestures stored in the gesture matching module 313 based on the extracted gesture information. The first control module 314 is configured for obtaining control instructions that match the standard gesture based on the identified standard gesture, and for controlling the driving assembly 10 to drive the slide screen 20 to translate and/or rotate according to the control instructions. Among them, each standard gesture corresponds to a pre stored control instruction.

When the gesture control system 31 is activated, the camera 311 starts to capture a picture around the slide screen 20, thereby extracting gesture information from the picture, identifying the gesture information and matching it with the standard gesture, and then controlling the slide screen 20 to translate to a designated position and angle based on the matching results.

Specifically, the standard gestures include sliding left or right, as well as clockwise and counterclockwise rotating. When the gesture information extracted from the picture captured by camera 311 is sliding left, sliding right, rotating clockwise or counterclockwise, it can easily match the standard gesture. When the gesture information in the picture captured by camera 311 is left down sliding, left up sliding, and straight or curved sliding, it can match the standard gesture of sliding left. At this time, the first control module 314 will control the slide screen 20 to translate to the left. When the gesture information in the picture captured by camera 311 includes actions such as right up sliding, right down sliding, it may be matched with the standard gesture of sliding right. The first control module 314 will control the slide screen 20 to translate to right. Similarly, when the gesture information in the image captured by camera 311 are gestures similar to counterclockwise or clockwise rotation, it may be matched with the standard gesture of counterclockwise or clockwise rotation, and the first control module 314 will control the slide screen 20 to translate or rotate to a corresponding position or state based on the standard gesture.

Figure 6 is a schematic block diagram of a voice control system for a slide screen driving system according to an embodiment of the present document. As a specific embodiment of the present document, the controller 30 of this embodiment may include a voice control system 32, which is configured to obtain and identify voice instructions of the user in front of the slide screen 20 as received instructions, and control the driving assembly 10 to drive the slide screen 20 to translate and/or rotate according to the voice instructions.

Similarly, the voice control system 32 may include a voice acquisition module 321, a voice matching module 322, and a second control module 323. The voice acquisition module 321 is configured to obtain voice around the slide screen 20. The voice matching module 322 is configured to identify standard voice stored in the voice matching module 322 based on the acquired voice information. The second control module 323 is configured to obtain control instructions that match the standard voice based on the identified standard voice, and control the driving assembly 10 to drive the slide screen 20 to translate and/or rotate according to the control instructions. Among them, each standard voice corresponds to a pre stored control instruction.

When the voice control system 32 is activated, the voice acquisition module 321 begins to acquire voice information around the slide screen 20. Specifically, the voice acquisition module 321 may be a radio system. The voice matching module 322 matches the acquired voice information with the standard voice to obtain control instructions that match the standard voice. The second control module 323 controls the slide screen 20 to translate and/or rotate according to the control instructions.

Specifically, in this embodiment, the standard voice may include "sliding left", "sliding right", "clockwise rotation", or "counterclockwise rotation". If the obtained voice information is "left moving", "move to left", "left sliding", or etc., they all can match the standard voice "left sliding". At this time, the second control module 323 controls the slide screen 20 to translate to left. Similarly, when the obtained voice information matches the standard voice "sliding right", "clockwise rotation", or "counterclockwise rotation", the second control module 323 will control the slide screen 20 to translate or rotate to a corresponding position or state.

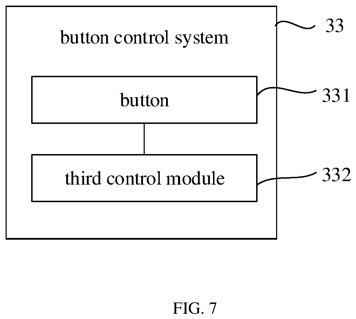

Figure 7 is a schematic block diagram of a button control system of a slide screen driving system according to an embodiment of the present document. As a specific embodiment of the present document, the controller 30 of the present embodiment may include a button control system 33, which is configured to obtain button instructions as received instructions and control the driving assembly 10 to drive the slide screen 20 to translate and/or rotate according to the button instructions. The button control system 33 may include a button 331 and a third control module 332. Among them, the button 331 may be a physical button or a touch screen button. The third control module 332 controls the slide screen 20 to translate or rotate to a corresponding position or state according to the control instruction corresponding to the button 331.

In practical applications, the controller 30 may include one or more of gesture control system 31, voice control system 32, and button control system 33 to diversify the driving and control methods of the slide screen.

The slide screen driving system 100 of this embodiment includes a gesture control system 31, a voice control system 32, and/or a button control system 33. The translation and rotation of the slide screen 20 in the slide screen driving system 100 may be controlled through gestures, voice, or buttons, thereby making the slide screen driving system 100 of this embodiment more convenient and intelligent to use.

As a specific embodiment of the present document, the target object of the present embodiment may further include an initial position (position A in Figures 3 and 4), which is located between the first and the second positions. The slide screen 20 has a horizontal screen state and a vertical screen state. In this embodiment, the initial position may be located between the front positions of the driver and the copilot seats. When the slide screen 20 is not in use, the slide screen 20 moves to its initial position to avoid its impact on the driver, or etc., thereby improving the safety performance of the vehicle.

As a specific embodiment of the present document, the controller 30 of this embodiment is configured to control the slide screen 20 to move to the initial position and rotate to the vertical screen state when the slide screen 20 is powered off, and when the slide screen 20 is powered on, to control the slide screen to move to the first or the second positions or to translate between the first and the second positions, while controlling the slide screen 20 to rotate between the horizontal and vertical screen states based on gesture instructions, voice instructions, or button instructions.

As a specific embodiment of the present document, the controller 30 of this embodiment may further be configured to control the slide screen 20 to stop moving or rotating when it is subjected to a force in a direction opposite to a preset direction during the translation or rotation process and the force is greater than or equal to a first preset value, and to continue to move as the force applied to the slide screen 20 is less than the first preset value.

In general, if the slide screen 20 encounters obstacles during translation or rotation, or if the user wishes the slide screen 20 to stop moving, the slide screen 20 may be subjected to an external force. At this point, if the slide screen 20 continues to move, it is likely to cause damage to the slide screen 20 and may also cause damage to the driving assembly 10. Therefore, in this embodiment, during the translation or rotation process of the slide screen 20, when the slide screen 20 encounters obstacles or is subjected to a force (specifically a push) opposite to the direction of motion, the controller 30 may control the slide screen 20 to stop moving. Of course, when the obstacle is removed, or the push is low or even disappears, the slide screen 20 continues to move. The first preset value in this embodiment is small, and only a small force is required.

As a specific embodiment of the present document, the controller 30 of the present embodiment may further be configured to control the slide screen 20 to translate or rotate in the direction opposite to the preset direction, when it is subjected to a force in the direction opposite to the preset direction during translation or rotation and the force is greater than or equal to a second preset value, and to control the slide screen 20 to stop moving or rotating when it translates a preset distance or rotates a preset angle in the direction opposite to the preset direction. The first preset value is smaller than the second preset value, and the preset distance is from 1mm to 3mm and the preset angle is from 1° to 5°. For example, the preset distance may be 1mm, 2mm, or 3mm. The preset angle may be 1°, 2°, 4°, or 5°.

In this embodiment, during the movement of the slide screen 20, if the force applied to the slide screen 20 is relatively large, it indicates that the force has a strong intention of stopping the movement of the slide screen 20. At this point, if the movement is only stopped, the force may not be completely eliminated, and after a long time, it may cause damage to the slide screen 20 or the driving assembly 10. Therefore, in this embodiment, the slide screen 20 is controlled to translate or rotate in the direction opposite to the preset direction, which not only stops the previous movement, but also eliminates potential damage to the slide screen 20 or the driving assembly 10 caused by the force.

In actual use, the specific scenarios in which the controller 30 controls the slide screen 20 to translate are as follows:
When the slide screen driving system 100 is powered off, the slide screen 20 is in its initial position and in a vertical screen state.

After the slide screen driving system 100 is powered on, under voice instructions, gesture instructions, or button instructions, controlling the slide screen 20 to translate to the first position (the main driver position) or the second position (the copilot position), and controlling the slide screen 20 to rotate to the horizontal or vertical screen state. At this point, the slide screen 20 can achieve human-machine interaction through gestures/ remote apps /voice/physical buttons/virtual buttons, and etc.

The translation that the slide screen 20 translates to the copilot position from other positions can only be achieved when the vehicle is stopped, and when the vehicle is moving, the slide screen will immediately return to the initial position from the copilot position.

When the user pushes back the slide screen 20 during translation or rotation, or the slide screen 20 encounters an obstacle during translation or rotation and the force is greater than or equal to the first preset value, the slide screen 20 stops moving. As the force or obstacle disappears, the slide screen 20 resumes the previous action.

As the force of pushing back the slide screen 20 is greater than or equal to the second preset value, the slide screen 20 will translate or rotate in the opposite direction and then stop.

As a specific embodiment of the present document, the present embodiment also provides a vehicle including the above slide screen driving system 100.

At this point, those skilled in the art could identify that although exemplary embodiments of the present document have been fully illustrated and described herein, without departing from the spirit and scope of the present document, many other variations or modifications that comply with the principles of the present document can still be directly determined or derived from the disclosure. Therefore, the scope of the present document should be understood and identified as covering all these other variations or modifications.

## Claims

1. A slide screen driving system, comprising:
a driving assembly;
a slide screen connected to the driving assembly; and
a controller configured for controlling the driving assembly to drive the slide screen to translate and/or rotate according to received instructions.

2. The slide screen driving system according to claim **1**, further comprising:
a mounting bracket connected to the driving assembly and the slide screen, and the driving assembly and the slide screen being mounted to a target object through the mounting bracket, the target object comprising a first position and a second position;
the mounting bracket being constructed to extend at least from the first position to the second position when the mounting bracket is disposed at the target object, so that the slide screen is movable between the first position and the second position along the mounting bracket.

3. The slide screen driving system according to claim **2**, wherein the mounting bracket is of a linear structure, and the first and the second positions are located on a line segment formed by the mounting bracket.

4. The slide screen driving system according to claim **2** or **3**, wherein the mounting bracket is configured to connect the driving assembly and the slide screen to the target object and guide the slide screen, the slide screen is located at a side of the mounting bracket which is away from the target object, the driving assembly is located at a side of the mounting bracket which is close to the target object, the mounting bracket is a frame structure, and the frame structure comprises a pair of parallel edges, when the slide screen moves under a drive of the driving assembly, the slide screen moves under a guidance of the parallel edges of the mounting bracket.

5. The slide screen driving system according to claim **4**, wherein the mounting bracket comprises an outer rail far from the target object and an inner rail close to the target object, the outer rail is configured to support and guide the slide screen, and the driving assembly is located between the outer rail and the inner rail;
the number of the inner rails is two, one end of each inner rail is connected to the outer rail and the other end of each inner rail is bent towards the target object, the inner rail is configured to connect the outer rail to the target object.

6. The slide screen driving system according to claim **4**, wherein the driving assembly comprises:
a driving motor for providing power;
a movable component connected to the slide screen to move under an action of the driving motor to drive the slide screen to move.

7. The slide screen driving system according to claim **6**, wherein the driving assembly further comprises a transmission mechanism, which is arranged between the driving motor and the movable component to transmit a power of the driving motor to the movable component.

8. The slide screen driving system according to claim **7**, wherein the driving motor comprises an output shaft, and the movable component comprises an input shaft;
the transmission mechanism comprises a conveyor belt, which is arranged between the output shaft and the input shaft to transmit the power of the driving motor to the movable component.

9. The slide screen driving system according to claim **7**, wherein the driving motor comprises an output shaft, and the movable component comprises an input shaft;
the transmission mechanism comprises a first gear arranged at the output shaft and a second gear arranged at the input shaft, the first gear and the second gear engage with each other to transmit the power of the driving motor to the movable component.

10. The slide screen driving system according to any one of claims **6-9**, wherein the movable component comprises:
a screw bolt being parallel to a guiding edge of the outer rail, and the screw bolt is connected to the driving motor through the transmission mechanism to rotate under the drive of the driving motor; and
a nut being sleeved around the screw bolt, and the nut is connected to the slide screen so that the slide screen follows a movement of the nut when the screw bolt rotates.

11. The slide screen driving system according to any one of claims **6-9**, wherein the driving assembly further comprises a rotation motor arranged between the movable component and the slide screen to drive the slide screen to rotate.

12. The slide screen driving system according to claim **1**, wherein the controller comprises a gesture control system for obtaining and identifying user gesture instructions in front of the slide screen as received instructions, and controlling the driving assembly to drive the slide screen to translate and/or rotate according to the gesture instructions.

13. The slide screen driving system according to claim **1**, wherein the controller comprises a voice control system for obtaining and identifying voice instructions from users in front of the slide screen as received instructions, and controlling the driving assembly to drive the slide screen to translate and/or rotate according to the voice instructions.

14. The slide screen driving system according to claim **1,** wherein the controller comprises a button control system for obtaining button instructions as received instructions, and controlling the driving assembly to drive the slide screen to translate and/or rotate according to the button instructions.

15. The slide screen driving system according to claim **2**, wherein the target object further comprises an initial position, which is located between the first position and the second position, the slide screen comprises a horizontal screen state and a vertical screen state;
the controller is configured as:
when the slide screen is powered off, controlling the slide screen to move to the initial position and rotate to a vertical screen state;
when the slide screen is powered on, controlling the slide screen to move to the first position, the second position, or to move between the first position and the second position, as well as controlling the slide screen to rotate between a horizontal and the vertical screen states according to the received instructions.

16. The slide screen driving system according to claim **1**, wherein the controller is further configured to:
controlling the slide screen to stop translation or rotation as the slide screen is subjected to a force in a direction opposite to a preset direction during translation or rotation along the preset direction and the force is greater than or equal to the first preset value, and controlling the slide screen to continue its previous motion as the force applied to the slide screen is less than the first preset value.

17. The slide screen driving system according to claim **16**, wherein the controller is further configured to:
controlling the slide screen to translate or rotate in the direction opposite to the preset direction as the slide screen is subjected to a force in the direction opposite to the preset direction during translation or rotation along the preset direction and the force is greater than or equal to a second preset value, and controlling the slide screen to stop moving when the slide screen translates a preset distance or rotates a preset angle in the direction opposite to the preset direction;
among them, the first preset value is smaller than the second preset value, the preset distance is from 1mm to 3mm, and the preset angle is from 1° to 5°.

18. A vehicle, comprising a slide screen driving system as claimed in any one of claims **1-17**.
